Europäisches Patentamt

European Patent Office

Office européen des brevets

(11) Publication number: **0 272 102**
**A2**

(12) # EUROPEAN PATENT APPLICATION

(21) Application number: **87311071.2**

(51) Int. Cl.⁴: **H04N 1/23**

(22) Date of filing: **16.12.87**

(30) Priority: **17.12.86 JP 298659/86**
**30.03.87 JP 74479/87**

(43) Date of publication of application:
**22.06.88 Bulletin 88/25**

(84) Designated Contracting States:
**DE FR GB**

(71) Applicant: **Oki Electric Industry Company,**
**Limited**
**7-12, Toranomon 1-chome Minato-ku**
**Tokyo 105(JP)**

(72) Inventor: **Tadokoro, JojiSOki Electric Ind. Co.,**
**Ltd.**
**7-12 Toranomon 1-chome**
**Minatoku Tokyo(JP)**
Inventor: **Noguchi, Matsusaburo Oki Electric**
**Ind. Co., Ltd.**
**7-12 Toranomon 1-chome**
**Minatoku Tokyo(JP)**

(74) Representative: **Serjeant, Andrew Charles**
**25 The Crescent King Street**
**Leicester, LE1 6RX(GB)**

(54) **Electronic print boards.**

(57) An electronic print board comprises a drawing medium (1) on which images can erasably be written manually, external input means (13) for supplying image data, a write device (14) for the image on the drawing medium (1), an image sensor (6) for reading the image on the drawing medium (1) and outputting image data, and a printer (11) for the image on a recording medium. Such boards are suitable for use at conferences, and where it is required to amend and print for immediate study.

**FIG.2**

EP 0 272 102 A2

## Electronic Print Boards

## Technical Field

The invention relates to electronic print boards suitable for use at conferences, and where it is required to amend print or drawings for immediate study.

## Background Art

Laying-open Patent Specification JP 171695/1984 describes an electronic print board comprising a drawing sheet, an image sensor for reading an image on the drawing sheet, and a printer for the image on a recording medium. Only images on the sheet can be printed, so amendments require complete reprinting.

## The Invention

The invention provides such an electronic print board characterised by external means for supplying image data, and a write device for the image on the drawing sheet or medium. This makes it possible automatically to write one or several sheets of reference-material's images onto the drawing sheet. The image can be erasably written manually on the drawing medium. When reference material is loaded, a document reader optically reads images and supplies or inputs the image as data. Based on this input data, the write device automatically writes the image onto the drawing sheet. This makes possible not only speedy writing but also revision of the images with both the original and revised material printed on recording paper.

When several sheets of reference material are loaded, the document reader can optically read them and input them as several screens of image data. The screens of image data can be compressed into one screen by a signal compression processor, and images from several sheets of reference material can automatically be written onto the drawing sheet.

## Drawings

Figure 1 is a block diagram showing the control system of the conventional electronic print board (or blackboard) of the above-mentioned laying-open Patent Specification;

Figure 2 is a similar block diagram showing the control system of a first embodiment of the invention,

Figure 3 is a section of a drawing sheet used in Figure 2;

Figure 4 is a block diagram of a second embodiment of the invention,

Figure 5 is a block diagram of a third embodiment of the invention, and

Figure 6 is a section of a drawing sheet used in the embodiment of Figure 5.

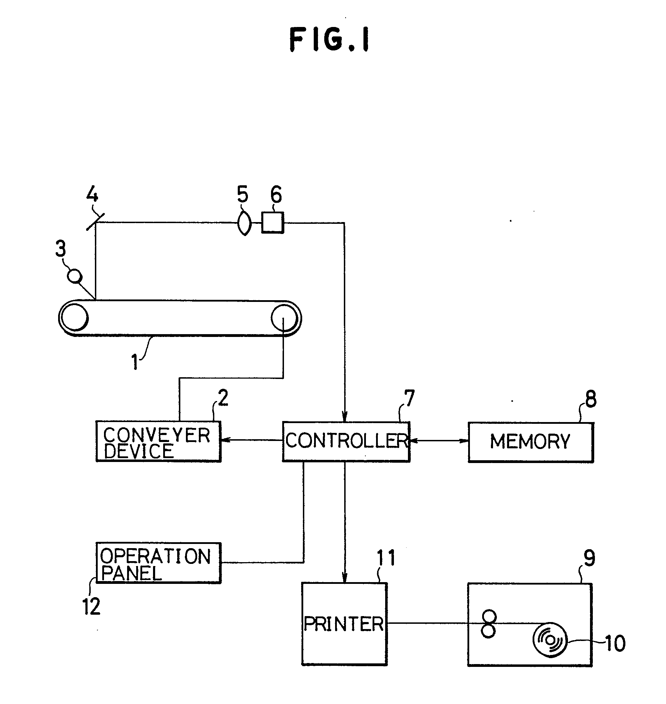

Figure 1 shows a circulatory conveyor-equipped drawing sheet 1, a conveyor device 2 for driving the drawing sheet 1, and a lamp 3 for illuminating the drawing sheet 1. A mirror 4 serves for changing the direction of the light reflected from the drawing sheet 1, a lens 5 for focusing the light reflected from the mirror 4, and an image sensor 6 for receiving the focused reflected light and optically reading the image from the drawing sheet 1.

Also shown is a controller 7 for the entire system, a memory 8 for storing the image data, a supplier 9 for recording paper 10, a printer 11 for the images from the drawing sheet 1 on the paper 10, and an operation panel 12 for instructions such as for printing.

To print an image which has been manually drawn on the sheet 1, the operator writes or draws something on the sheet 1, and inputs a print command on the panel 12, so that the device 2 conveys one screen of the drawing sheet 1 past the lamp 3 which illuminates it. The light reflected from the drawing sheet 1 is redirected by the mirror 4, passes through the lens 5, and is focused towards the image sensor 6 which reads it as image data. The image data is sent via the controller 7 to the printer 11 which prints corresponding images onto the paper 10.

When it is necessary to print the image onto several sheets of recording paper 10, a command can be input via the panel 12 to store the image data in the memory 8, and sequentially to print the stored image data onto several sheets of recording paper 10. However, only images which have been written or drawn onto the drawing sheet 1 can be printed. This means that in applications such as conferences, where the need arises to study one sheet of reference material and to revise the reference material and distribute copies to everyone, the new material must be entirely rewritten and/or redrawn on the sheet 1, or revised material must be printed onto the required number of sheets, for example by a photocopier. This interferes with the progress of the conference and does not take full advantage of the electronic print board.

## Best Mode

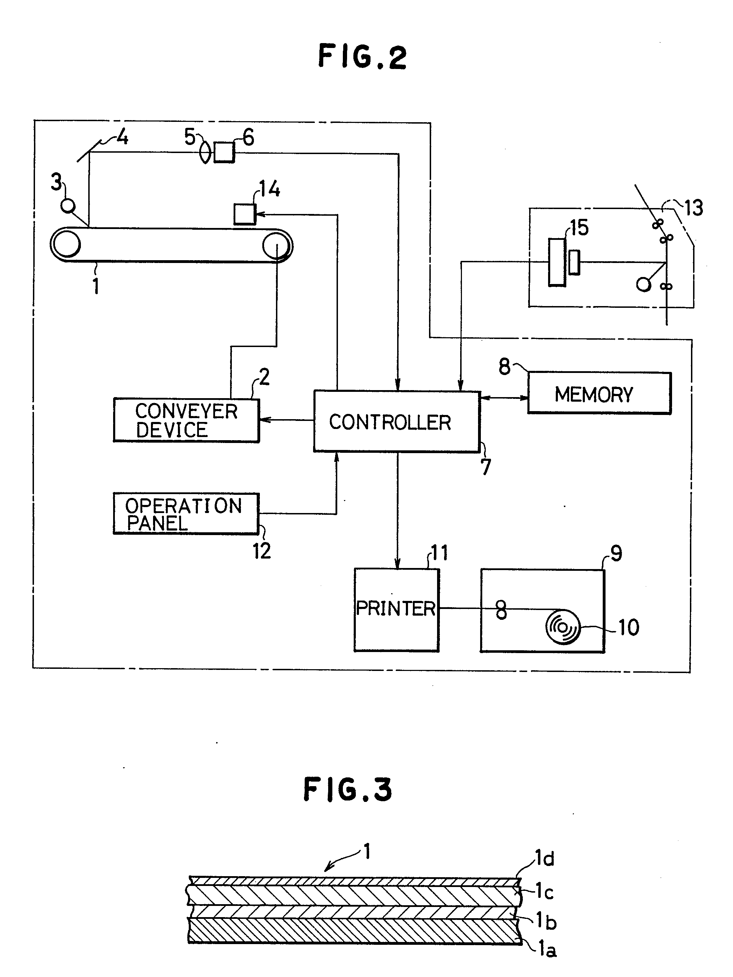

Figure 2 shows a similar system comprising also a document reader 13 and a write device 14 which are connected to the controller 7. The reader 13 comprises an input image reader 15 for optically reading externally input document images and inputting them as image data. The write device 14 enables the document images based on the image data obtained from the documents loaded into the reader 13 to be written onto the drawing sheet 1 as erasable images.

In Figure 3, the sheet 1 comprises a base film 1a, a photochromic function layer 1b, polyester layer 1c, and a hard coat 1d, in that order. The image write/erase mechanism is as follows: When the sheet 1 is exposed to heat radiation from a linear heating device mounted in the write device 14, the photochromic function layer 1B is changed from a solid state to a liquid state. Light from the linearly arranged light-emitting diodes (not shown) attached to the write device 14 changes and discolours an optical recording substance contained in the photochromic function layer 1b. The light-emitting diode emits light selectively in accordance with the image data, and the emitted light is recorded in the optical recording substance. When the photochromic function layer 1b is cooled in this changed state, the areas where the optical recording substance is discoloured remain discoloured as it hardens, and becomes an image display. To erase the displayed image, heat is again emitted from the linear heating device to liquefy the solid photochromic function layer 1b, and when this layer is once again cooled it returns to its original blank state.

When, during conferences or other similar situations, it is necessary for the participants to study new material in addition to the image that was manually drawn on the sheet 1, or to append new material to the original image, an operator loads the new material into the document reader 13 and inputs a command via the panel 12 to write a new image on the sheet 1. At this point, the input image reader 15 in the document reader 13 optically reads the image from the loaded new document and sends this image as image data to the controller 7. The image data are sent via the controller 7 to the write device 14, and the write device 14 uses the write/erase mechanism to write and display an image based on the received image data onto the photochromic function layer 1b of the sheet 1. The displayed image on the photochromic function layer 1b and any image which has been added by a marker on the hard coat layer 1d are printed onto the recording paper 10 by the printer 11. Where several sheets of the recording paper 10 are to be printed upon, the operator inputs a multiple print command via the panel 12. This causes the image data that have been read to be stored in the memory 8. Then the images are printed onto the desired number of sheets of the recording paper 10 based on the stored image data.

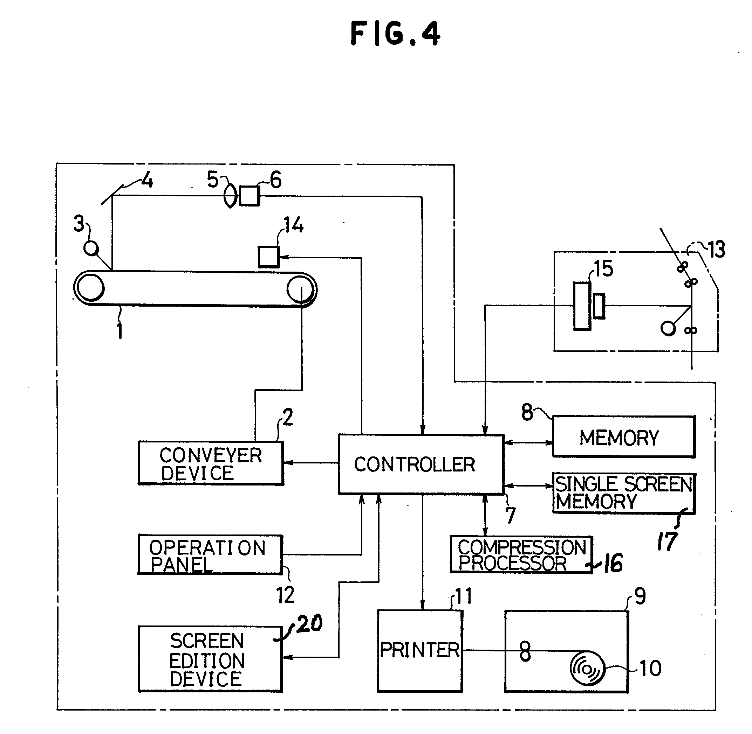

Figure 4 has a connection to a compression processor 16, a single screen memory 17 and a screen edition device 20.

The compression processor 16 performs a signal processing to compress several screens of image data sent from the document reader 13 via the controller 7. The compression factor by which the area of each screen of image is compressed may for example be four. That is the compressed screen of image can be fitted into a quarter of the entire screen. The arrangement can be such that the compression factor can be varied or selected by manipulation of the operation panel 12. The single screen memory 17 receives the several sheets of compressed image data from the compression processor 16 via the controller 7, and assigns addresses to enable the compressed screens of image data to be stored as a single screen. The screen edition device 20 makes allotment of the compressed screens of images to respective parts or quarters of the entire screen. The allotment can be designated by manipulation of the operation panel 12.

During conferences, when it becomes necessary to study several sheets of new documents, the operator first loads the new document sheets one by one into the reader 13, and then inputs via the panel 12 a command for writing several new screens of images. The several screens of new images are optically read by the reader 15 and sent to the controller 7 as image data. These screens of image data are stored in the memory 8 by the controller 7. The compression processor 16 uses the appropriate signal processing to compress the screens of image data and send them to the write device 14. The allotment can be selected by the operator at the panel 12.

The write device 14 uses the write/erase mechanism to write and display an image based on the compressed screens of image data onto the sheet 1. To print several screens of images that have been compressed and edited onto several sheets of the paper 10, the operator inputs a print command for several screens via the panel 12. The compressed screens of image data are stored on one screen, and the screens of images are printed onto paper based on this one screen of compressed image data.

It is preferable for the sheet and the write device to be able to write the images automatically. For example, such writing can be done with a drawing sheet which comprises a liquid layer containing magnetic particles which are drawn to one side by a write device. If the photochromic function layer is structured so as to react to markers used for manual drawing, the entire image can be erased at once using the write device's image deletion process.

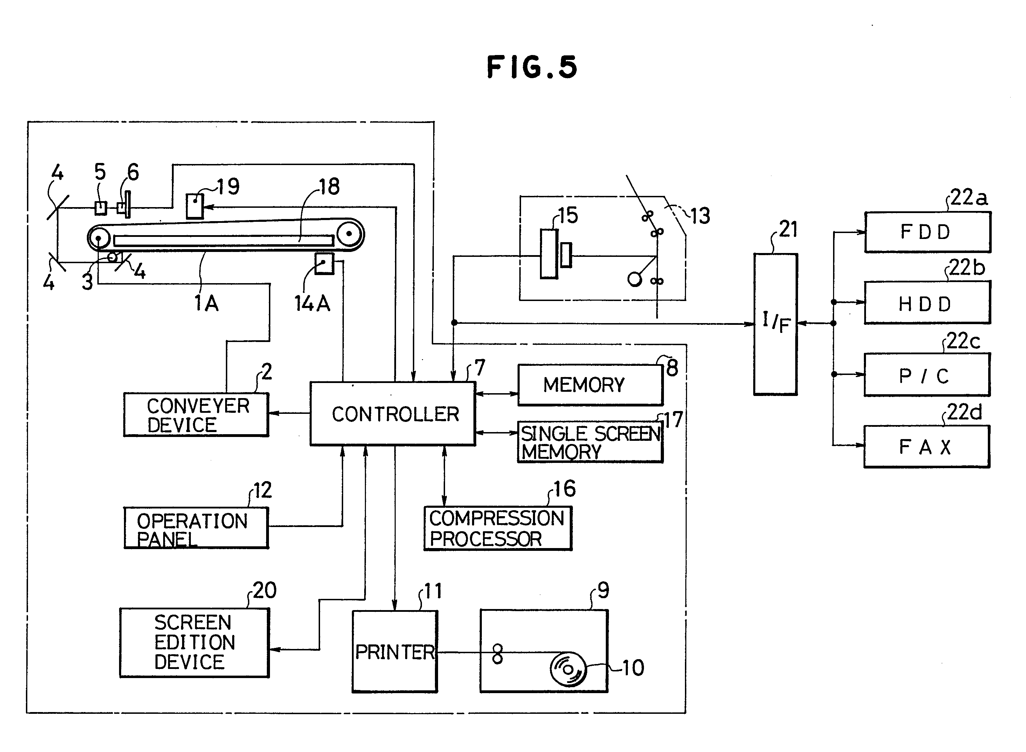

Figure 5 shows how the system can be connected via an interface (I/F) 21 to a floppy disc drive unit (FDD) 22a, a hard disc drive unit (HDD) 22b, a personal computer unit (P/C) 22c and a facsimile unit (FAX) 22d. These devices 22a to 22d are alternative forms of data input device, and can be used to supply image data that could be written on the sheet, particularly the photochromic function layer 1b. The selection from these input devices 22a to 22d can be made from the panel 12. This permits the display of the image data from various sources on the drawing sheet, with or without compression, and subsequent printing in any desired number.

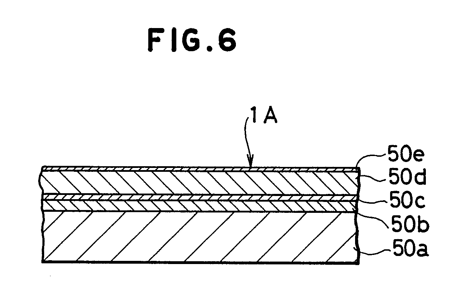

A different kind of drawing sheet 1A is required, as shown in Figure 6. This comprises a base film 50a (50 microns thick), and an adhesive layer 50b (10 microns thick), a heat reversible layer 50c (10 microns thick), a heat reversible layer 50c (10 microns thick), a transparent polyester film 50d (25 microns thick) and a hardcoat layer 50e (3 microns thick) which are layered on the base film 50a in the stated order.

The heat reversible layer 50d may be formed of $Ag_2H_gl_4$ which changes its colour or darkness depending on the temperature with hysteresis. To write images on the heat reversible layer 50d, heat is selectively applied. For this purpose, a write device 14A comprises a head including a line of thermal dots. When energized, each dot heats the confronting part of the heat reversible layer 50d to about 50°C. The heated part is thereby darkened. A heater panel 18 is provided to maintain the temperature of the heat reversible layer 50d above a certain temperature, e.g. 40°C, to preserve the writing.

The arrangement for reading the image from the sheet 1A is so modified that it reads the image along the edge or inside of the heater 18. This is because, outside the heater 18, the image on the heat reversible layer 50d may deteriorate owing to the decrease in temperature.

A cooler 19 is provided to erase the image on the heat reversible layer 50d. It cools the confronting part of the heat reversible layer 50c below 30°C.

A document reader 13 whereby images from an external reference material can be optically read and input as image data comprises a write device 14A for writing images from a reference material onto the sheet 1A based on image data provided by the document reader 13. This means that at conferences not only is speedy writing onto the sheet 1A possible, but also revision of the image. Moreover, both the original and revised image can be printed on one or more sheets of paper.

When there is a processor for compressing several screens of image data into one screen by a signal processor, images from several sheets of reference material can be promptly written onto the drawing sheet. Accordingly, images from several sheets of reference material can promptly be printed onto one sheet of recording paper without any prior preparation of the reference material. As a result, several sheets of the reference material can be seen on a single sheet in any desired combined form. This is also advantageous in that fewer sheets need be printed, which in turn results in lower printing costs.

## Claims

1. An electronic print board comprising a drawing medium (1), an image sensor (6) for reading an image on the drawing medium (1) and outputting image data, and a printer (11) for the image on a recording medium characterised by external input means (13) for supplying image data and a write device (14) for the image on the drawing medium (1).

2. A print board according to claim 1 wherein the drawing medium (1) comprises a first layer permitting manual writing, and a second layer (1b) permitting writing by the write device (14).

3. A print board according to claim 1 or claim 2 comprising a memory (8) for storing the image data from the input means (13).

4. A print board according to any preceding claim comprising a compression processor (16) for several screens of images from the input means (13).

5. A print board according to any preceding claim wherein the input means(13) comprises an optical reader (15) for reading a document and producing image data reflecting the contents of the document.

6. A print board according to any preceding claim comprising a screen edition device (20).

7. A print board according to any preceding claim comprising an interface (21) to a floppy disc drive unit (22a), a hard disc drive unit (22b), a personal computer (22c) and/or a facsimile unit (22d) for data input.

# FIG.1

# FIG.2

# FIG.3

# FIG.4

CONVEYER DEVICE  2

CONTROLLER

MEMORY  8

SINGLE SCREEN MEMORY  17

OPERATION PANEL  12

COMPRESSION PROCESSOR  16

7

SCREEN EDITION DEVICE  20

PRINTER  11

8

9

10

15

13

14

5  6

4

3

1

# FIG.5

0 272 102

# FIG.6

1 A

50e
50d
50c
50b
50a